# DEMANDE DE BREVET EUROPEEN

(11) **EP 3 808 546 A1**
(43) Date de publication de la demande: **21.04.2021**
(21) Numéro de dépôt: 20202149.9
(22) Date de dépôt: 15.10.2020
(51) Int. Cl.: B29C 70/24, B29B 11/16, B29C 33/20, B29C 33/34, B29C 35/02, B29C 43/04, B29C 70/34, B29C 70/46, B29C 70/86, F16C 7/02, B29C 70/70, B29C 33/02, B29C 43/02, B29C 43/18, B29C 43/52, B29C 35/16, B29L 31/06, B29C 53/56, B29C 70/38, B29C 33/00, B29C 33/44, B29C 53/82

(54) **PROCEDE DE FABRICATION D'UNE PIECE SOUS PRESSE AVEC OUTIL VERROUILLABLE EN HAUTEUR**

(30) Priorité: 17.10.2019 FR 1911572
(71) Demandeur: Setforge Société Nouvelle, 42152 l'Horme (FR)
(72) Inventeur: FELIX, Damien, 42400 SAINT CHAMOND (FR)
(74) Mandataire: Lavialle, Bruno François Stéphane

(57) **Abrégé**

L'invention concerne un procédé pour fabriquer une pièce en matériau composite. Il comprend les étapes de :
- réaliser une préforme de la pièce ;
- installer la préforme dans un outillage de mise en forme comprenant une matrice inférieure et une matrice supérieure qui comportent en creux une empreinte reproduisant une forme externe de la pièce à fabriquer ;
- appliquer à chaud à l'aide d'une presse un effort de presse sur les matrices pour amener les matrices dans une position rapprochée dans laquelle la préforme est pressée entre les deux matrices ;
- solidariser ensemble les matrices de manière à les maintenir en position rapprochée puis interrompre l'effort de presse ;
- retirer de la presse les matrices ainsi solidarisées et les refroidir ;
- désolidariser la matrice inférieure et la matrice supérieure pour en extraire la pièce ainsi formée.

## Description

La présente invention concerne un procédé pour fabriquer, à l'aide d'une presse, une pièce en matériau composite, par exemple une pièce tridimensionnelle ou massive, telle qu'une articulation ou une bielle, tout en limitant le temps d'utilisation de la presse.

### ARRIERE PLAN DE L'INVENTION

Il est connu de fabriquer des pièces en matériau composite en intégrant des fibres de renfort continues dans de la résine thermoplastique, et en procédant à la mise en forme des pièces sous presse.

En pratique, ce procédé comprend généralement les étapes de :
- disposer des fibres de renfort continues orientées dans des directions prédéterminées et de la résine dans un outillage de préformage de façon à réaliser une préforme de la pièce ;
- installer la préforme dans un outillage de mise en forme comprenant une matrice inférieure et une matrice supérieure qui comportent en creux une empreinte reproduisant une forme externe de la pièce à fabriquer ;
- appliquer à chaud, à l'aide d'une presse, un effort de presse sur les matrices pour amener les matrices dans une position rapprochée dans laquelle la préforme est pressée entre les deux matrices ;
- refroidir la pièce matricée en maintenant l'effort de presse jusqu'à la solidification de la résine thermoplastique.

Ce procédé, connu du document FR-A-3032144, permet notamment la fabrication de pièces tridimensionnelles et/ou massive tout en leur conférant une tenue mécanique élevée.

Néanmoins, le temps nécessaire à la solidification de la résine thermoplastique peut, en fonction de la masse et de la géométrie de la pièce, être supérieur à plusieurs dizaines de minutes pendant lesquelles la presse maintient sous pression la pièce et est donc indisponible pour recevoir une nouvelle pièce à matricer.

Dès lors, un tel procédé de fabrication peut être incompatible avec certaines industries exigeant une cadence de production élevée, comme par exemple l'industrie automobile, et cela d'autant plus que le temps d'utilisation de la presse pour maintenir la pièce sous pression est bien plus important que celui pour presser la préforme entre les deux matrices.

### OBJET DE L'INVENTION

L'invention a donc pour objet de proposer un procédé de fabrication de pièces en matériau composite à matrice thermoplastique permettant de limiter le temps d'utilisation de la presse.

### RESUME DE L'INVENTION

A cet effet, on propose, selon l'invention, un procédé pour fabriquer une pièce en matériau composite, comprenant les étapes de :
- réaliser une préforme de la pièce ;
- installer la préforme dans un outillage de mise en forme comprenant une matrice inférieure et une matrice supérieure qui comportent en creux une empreinte reproduisant une forme externe de la pièce à fabriquer ;
- appliquer à chaud, à l'aide d'une presse, un effort de presse sur les matrices pour amener les matrices dans une position rapprochée dans laquelle la préforme est pressée entre les deux matrices ;
- solidariser ensemble les matrices de manière à les maintenir en position rapprochée puis interrompre l'effort de presse ;
- retirer de la presse les matrices ainsi solidarisées et les refroidir ;
- désolidariser la matrice inférieure et la matrice supérieure pour en extraire la pièce ainsi formée.

Ainsi, la presse n'est utilisée que pour rapprocher les matrices entre elles et mettre en forme la pièce préformée. Le maintien sous pression de la pièce préformée pendant son refroidissement est ici assuré par la solidarisation des matrices en position rapprochée, ce qui permet de retirer les matrices de la presse sans attendre la solidification de la résine, et donc de libérer la presse qui est alors disponible pour recevoir un autre outillage de mise en forme.

De manière particulière, la réalisation de la préforme comporte l'étape de disposer des fibres longues de renfort et de la résine dans un outillage de préformage.

De manière particulière, au moins un insert est placé dans l'outillage de préformage pour que celui-ci soit intégré dans le matériau de la préforme.

L'invention a également pour objet un procédé tel que défini ci-dessus, comprenant l'étape de chauffer l'outillage de mise en forme pour réchauffer la préforme avant d'être transféré sous la presse.

L'invention a également pour objet un procédé tel que défini ci-dessus, comprenant l'étape de sensiblement maintenir en température l'outillage de mise en forme au moins jusqu'à son retrait de la presse.

De manière particulière, le refroidissement de l'outil de mise en forme est réalisé par un flux d'air diffusé sur des parois dudit outil de mise en forme.

De manière particulière, la solidarisation des matrices est réalisée par un dispositif de serrage mécanique.

L'invention concerne également un outil de matriçage pour la mise en œuvre d'un tel procédé, l'outil comprenant :
- une matrice inférieure et une matrice supérieure montée mobile par rapport à la matrice inférieure entre une position éloignée et une position rapprochée, les matrices comportant en creux une empreinte reproduisant une forme externe d'une pièce à fabriquer ; et
- un dispositif de verrouillage pouvant être commuté entre un état verrouillé dans lequel il empêche tout éloignement de la matrice supérieure par rapport à la matrice inférieure et un état déverrouillé dans lequel la matrice supérieure est libre de s'éloigner de la matrice inférieure.

De manière particulière, le dispositif de verrouillage est un dispositif de serrage mécanique.

### BREVE DESCRIPTION DES DESSINS

L'invention sera mieux comprise à la lumière de la description qui suit, laquelle est purement illustrative et non limitative, et doit être lue en regard des dessins annexés, parmi lesquels :
[Fig.1] la figure 1 est une vue en perspective d'une bielle double fabriquée avec le procédé selon l'invention ;
[Fig.2] la figure 2 montre en perspective le bobinage d'un toron de fibres de renfort autour des reliefs d'un outillage de bobinage pour fabriquer la bielle illustrée à la figure 1 conformément à l'invention ;
[Fig.3] la figure 3 est une vue de détail montrant en perspective un relief de bobinage de l'outillage illustré à la figure 2 sous forme de plot comportant un épaulement ;
[Fig.4] la figure 4 est une vue en coupe montrant une possibilité de bobinage d'un toron de fibres de renfort autour d'un plot à épaulement ;
[Fig.5] la figure 5 est une vue en perspective d'un outillage de matriçage dans lequel est installée une pièce en cours de matriçage ;
[Fig.6] la figure 6 est une vue schématique de différentes étapes du procédé selon l'invention ;
[Fig.7A] la figure 7A est une vue en perspective d'un dispositif de verrouillage d'un outil de matriçage selon un premier mode de réalisation de l'invention ;
[Fig.7B] la figure 7B est une vue en perspective d'une variante du dispositif de verrouillage illustré à la figure 7A ;
[Fig.8A] la figure 8A est une vue en perspective d'un dispositif de verrouillage d'un outil de matriçage selon un deuxième mode de réalisation de l'invention ;
[Fig.8B] la figure 8B est une vue en perspective d'une variante du dispositif de verrouillage illustré à la figure 8A ;
[Fig.9] la figure 9 est une vue en perspective d'un dispositif de verrouillage d'un outil de matriçage selon un troisième mode de réalisation de l'invention ;
[Fig.10] la figure 10 est une vue en perspective d'un dispositif de verrouillage d'un outil de matriçage selon un quatrième mode de réalisation de l'invention ;
[Fig.11] la figure 11 est une vue en perspective d'un dispositif de verrouillage d'un outil de matriçage selon un cinquième mode de réalisation de l'invention ;
[Fig.12] la figure 12 est une vue en perspective d'un dispositif de verrouillage d'un outil de matriçage selon un sixième mode de réalisation de l'invention.

### DESCRIPTION DETAILLEE DE L'INVENTION

Le procédé de l'invention est ici décrit en application à la fabrication d'une bielle double 1, étant entendu qu'il ne s'agit là que d'un exemple de mise en œuvre du procédé.

La bielle double 1 comporte un palier central 2 orienté selon un axe principal AP, et deux bras latéraux 3 et 4 orientés transversalement en s'étendant selon un axe AT perpendiculaire à l'axe AP, et qui partent du palier central 2 dans des directions opposées. Chaque bras est terminé par un palier correspondant, et ces paliers latéraux, repérés par 6 et 7, sont orientés parallèlement au palier central 2.

Chacun des trois paliers a une forme de paroi généralement cylindrique à base circulaire, le palier central ayant un diamètre significativement supérieur à celui des paliers latéraux.

Le bras 3 comporte une paroi plane 9 s'étendant selon un plan normal à la direction principale AP, et deux nervures 11 et 12 bordant la paroi plane 9. Chaque nervure est une paroi s'étendant perpendiculairement à la paroi plane 9, et qui raccorde le palier central 2 au palier latéral 6. Les deux nervures 11 et 12 sont situées de part et d'autre de l'axe transversal AT qui passe quant à lui par l'axe central de chacun des paliers 2, 6 et 7.

La paroi plane 9 a une épaisseur relativement faible par rapport à la hauteur des paliers le long de la direction principale AP, alors que les nervures latérales 11 et 12 ont chacune une hauteur proche de la hauteur des paliers.

La bielle double 1 a une forme qui est symétrique par rapport à un plan normal à l'axe transversal AT et contenant l'axe principal AP qui par ailleurs coïncide avec l'axe central du palier central 2. Ainsi, le bras 4 est le symétrique du bras 3, de sorte qu'il comporte lui aussi deux nervures du même type.

La bielle double 1 est également symétrique par rapport à un plan contenant l'axe transversal AT et l'axe principal AP, et elle est également symétrique par rapport à un plan normal à l'axe principal AP et contenant l'axe transversal AT.

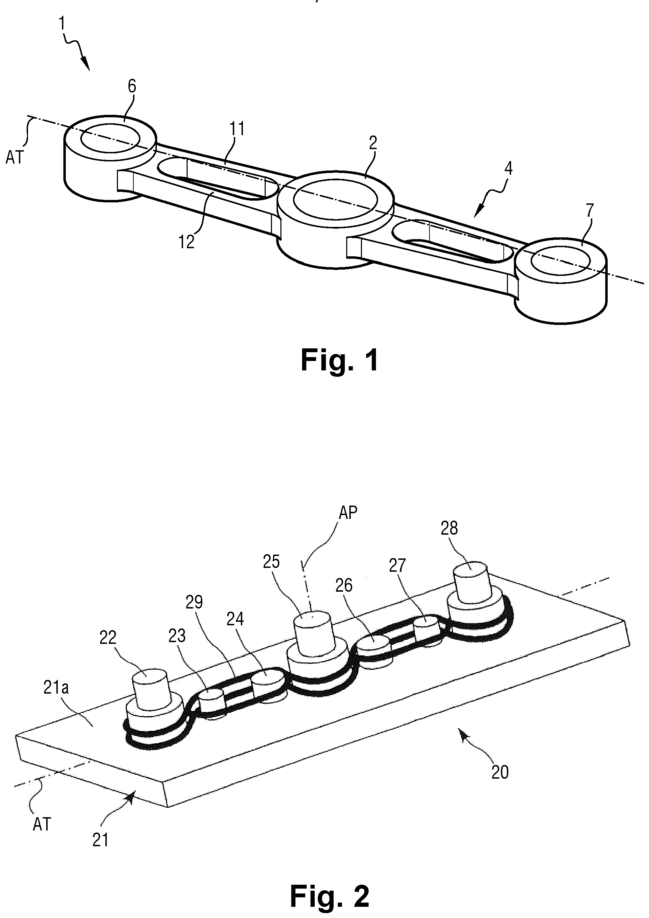

Cette bielle est fabriquée à l'aide des outillages représentés sur les figures 2 à 5, à savoir un outillage de préformage 20 et un outillage de matriçage ou estampage 40.

L'outillage de préformage 20 comporte ici une platine ou sole 21 ayant une face supérieure 21a plane, cette platine étant pourvue de sept reliefs de bobinage qui sont ici des plots, repérés par les références 22 à 28. Plus concrètement, le plot 22 correspond au palier 6, les plots 23 et 24 correspondent à l'espace situé entres les nervures 11 et 12 du bras 3, le plot 25 correspond au palier central 2, les plots 26 et 27 correspondent à l'espace situé entre les nervures du bras 4, et le plot 28 correspond au palier 7.

Comme visible sur la figure 2, un toron 29 de fibres de renfort imprégné de résine thermoplastique est bobiné sur l'outillage de préformage 20, autour des plots 22-28, de manière à suivre une trajectoire qui délimite à la fois les trois paliers ou chapes 2, 6, et 7, et les nervures 11 et 12 du bras 3 ainsi que les nervures correspondantes du bras 4. Les fibres de renfort et la résine ont une masse totale égale à celle de la bielle double 1. Le toron 29 de fibres est disposé pour s'étendre selon une trajectoire coïncidant avec les directions de sollicitation de la pièce à fabriquer.

Le toron 29 de fibres de renfort peut se présenter sous différentes formes : il peut s'agir d'un ensemble de fibres organisées parallèlement les unes aux autres ou en hélice ; il peut également s'agir d'un ensemble de fibres tressées les unes avec les autres pour constituer une tresse souple s'étendant globalement selon une direction principale, mais constituée de fibres de fuseau orientées selon de multiples directions.

Le toron 29 imprégné de résine thermoplastique est bobiné autour des différents plots de telle manière que, comme visible sur la figure 2, il entoure complètement le plot latéral 22 pour passer ensuite d'un même côté des plots 23 et 24 avant de changer de côté pour entourer une moitié du plot central 25 pour repasser ensuite d'un même côté des plots 26 et 27 avant d'entourer complètement le deuxième plot latéral 28 pour revenir selon une trajectoire symétrique jusqu'au premier plot latéral 22, ce qui correspond à un tour complet.

Le toron 29 peut ainsi être bobiné sur plusieurs tours autour des différents plots, le nombre de tours étant conditionné par le diamètre de la section du toron vis-à-vis des dimensions de la pièce à fabriquer. Dans l'exemple de la figure 2 qui est donné à titre principalement didactique pour comprendre la trajectoire du toron, celui-ci est bobiné sur un tour et demi.

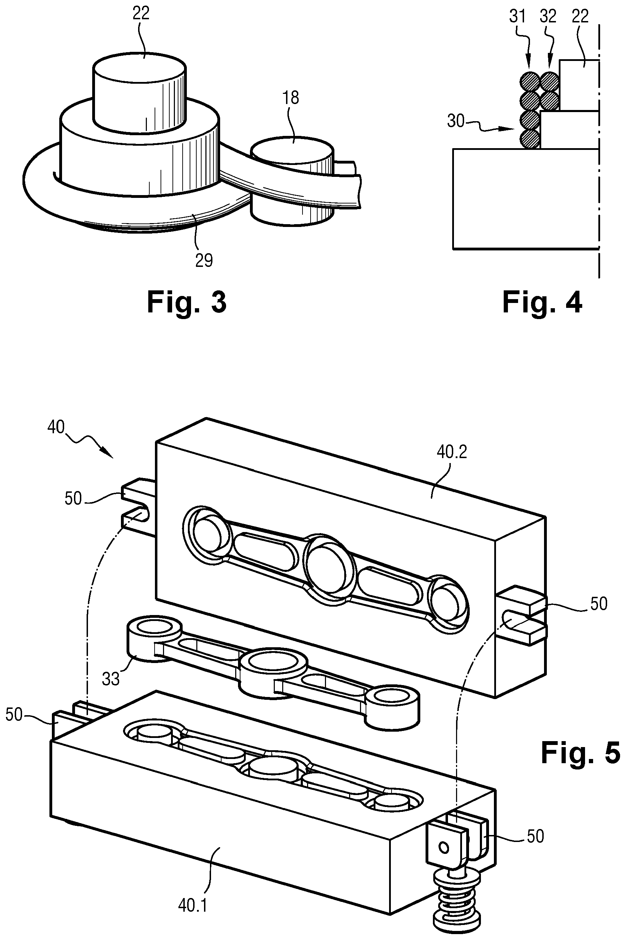

Comme visible sur les figures 2 et 3, les plots 22, 25 et 28 sont des plots épaulés : il s'agit de plots de révolution comportant une embase cylindrique prolongée par un téton coaxial de plus faible diamètre que l'embase. Cette forme des plots 22, 25 et 28 permet de réaliser des paliers ou chapes dont la surface interne est elle-même chanfreinée, c'est-à-dire qu'elle comporte deux zones ayant deux diamètres différents.

En particulier, et comme visible sur les figures 3 et 4, le toron 29 peut être bobiné sur un nombre de tours important en étant agencé de façon à constituer une seule couche circonférentielle 30 autour de l'embase du plot 22, et deux couches circonférentielles concentriques 31 et 32 autour de l'extrémité supérieure du plot 22 qui présente un diamètre significativement plus faible que son embase.

Ainsi, différentes solutions peuvent être envisagées en ce qui concerne le bobinage du toron sur l'outillage de préformage 20, en fonction des particularités de formes que l'on souhaite obtenir au niveau de la pièce à fabriquer.

Le toron 29 imprégné de résine thermoplastique est bobiné sur l'outillage de préformage 20 à chaud, de manière à avoir la souplesse requise pour permettre un bobinage précis. Avantageusement, l'outillage de préformage 20 est du type chauffant, et le bobinage en tant que tel peut être réalisé au moyen d'un bras robotisé.

Lorsque le bobinage du toron 29 est entièrement terminé, il constitue une préforme 33 de la pièce à fabriquer. Cette préforme est laissée à refroidir pour qu'elle se solidifie dans sa forme propre.

Lorsque la préforme 33 est solidifiée, elle est extraite de l'outillage de préformage 20. A ce titre, les éléments de relief que constituent les plots 22-28 sont avantageusement prévus rétractables par rapport à la platine 21 qui les porte. Dans ce cas, le détachement de la préforme est obtenu en commandant la rétraction des plots 22-28 avant de saisir cette préforme 33 pour la mettre en place dans un outillage de matriçage 40.

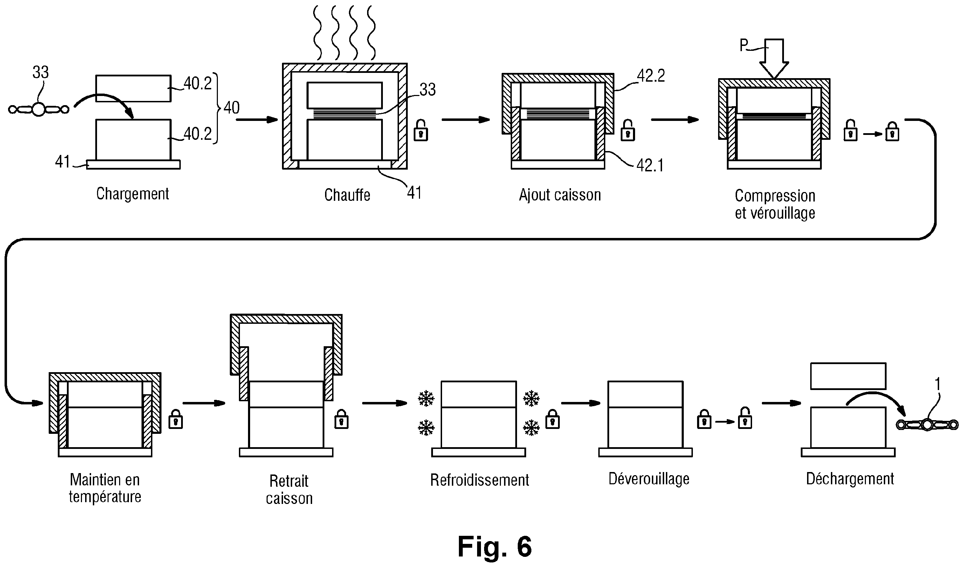

En référence aux figures 5 et 6, l'outil de matriçage 40 comprend une matrice inférieure 40.1 dans laquelle est usinée une empreinte de la forme externe de la bielle double 1 à fabriquer, et une matrice supérieure 40.2 comportant en creux une forme complémentaire de l'empreinte. La matrice inférieure 40.1 repose sur un plateau 41 isolant thermiquement dont elle est solidaire.

Lorsque la préforme 33 a été installée dans l'empreinte de la matrice inférieure 40.1, la matrice supérieure 40.2 est déposée sur la préforme 33 de façon à compléter l'outil de matriçage 40.

L'outil de matriçage 40 est alors transféré dans un dispositif de chauffage agencé pour réchauffer la préforme 33 à une température ici comprise entre cent soixante et deux cent degrés Celsius afin d'obtenir un ramollissement de la résine thermoplastique avant de débuter le cycle de matriçage. Le dispositif de chauffage peut par exemple être un inducteur, un inducteur à passage continu, un four, un four à passage continu ou un tunnel à infrarouge... La matrice inférieure 40.1 et/ ou la matrice supérieure 40.2 peuvent également être prévues chauffantes.

Après avoir été transféré dans le dispositif de chauffage, l'outil de matriçage 40 est enfermé dans un caisson 42 isolant thermiquement pour maintenir en température la préforme 33. Le caisson 42 est constitué d'un corps 42.1 formant avec le plateau 41 un conteneur dans lequel est logée la matrice inférieure 40.1, et d'un couvercle 42.2 venant coiffer la matrice supérieure 40.2 et recouvrir partiellement le corps 42.1 de manière à pouvoir coulisser le long dudit corps 42.1 lors d'un rapprochement de la matrice supérieure 40.2 selon une direction sensiblement verticale. Le plateau 41 et le caisson 42 sont réalisés dans un matériau résistant à la compression.

Le caisson 42 contenant l'outil de matriçage 40 est ensuite installé sous une presse. Le cycle de matriçage peut alors débuter. Ainsi, la presse est commandée pour exercer un effort de presse P prédéterminé sur la matrice supérieure 40.2 afin de rapprocher ladite matrice supérieure 40.2 de la matrice inférieure 40.1 et de les amener dans une position rapprochée prédéterminée dans laquelle les deux matrices 40.1, 40.2 sont en contact.

La matrice inférieure 40.1 et la matrice supérieure 40.2 coopèrent ensemble de telle manière que la résine soit contenue, c'est-à-dire qu'elle ne fuit pas de la matrice inférieure 40.1. On s'assure en outre qu'aucune fibre ne dépasse de la matrice inférieure 40.1 pour éviter qu'elle ne soit cisaillée par la matrice supérieure 40.2.

Lorsque les matrices 40.1, 40.2 sont en position rapprochée, un dispositif de verrouillage 50 est actionné pour solidariser lesdites matrices 40.1, 40.2 entre elles et ainsi les maintenir en position rapprochée sans recourir à l'effort de presse.

Le dispositif de verrouillage 50 est avantageusement agencé sur des côtés de l'outil de matriçage 40 afin de ne pas interférer avec la presse et le plateau 41, et est actionnable au travers du caisson 42.

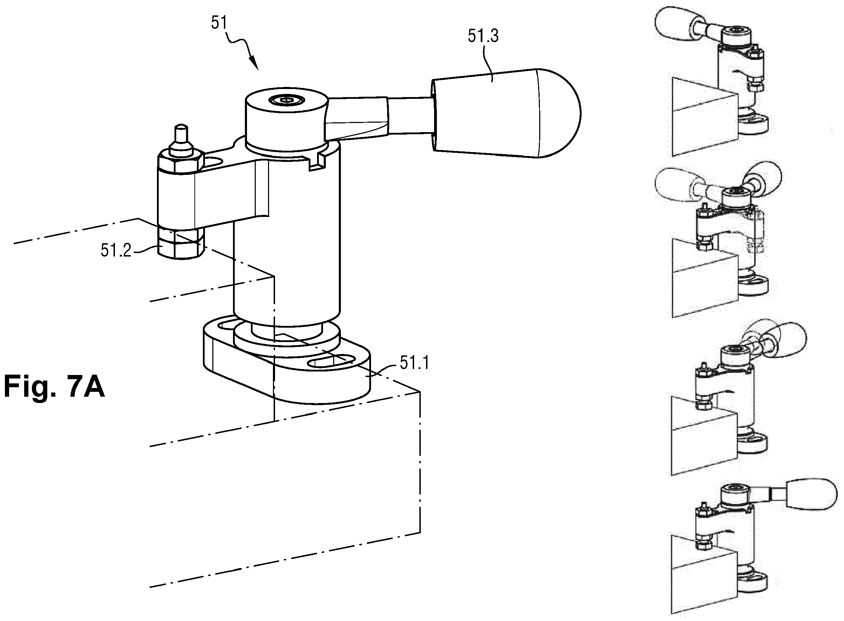

En référence à la figure 7A, le dispositif de verrouillage 50 comprend par exemple deux ensembles de bridage rapide pivotant 51 fixés de part et d'autre de la matrice inférieure 40.1. De façon connue en soi, chaque ensemble de bridage comporte une embase 51.1 dont une extrémité est fixée sur un appendice latéral de la matrice inférieure 40.1 et sur lequel un élément d'appui 51.2 est monté pivotant autour d'un axe sensiblement vertical entre une position dégagée et une position pivotée dans laquelle l'élément d'appui 51.2 est en regard d'un appendice latéral de la matrice supérieure 40.2. L'élément d'appui 51.2 est ajustable en hauteur entre la position pivotée et une position serrée dans laquelle ledit élément d'appui 51.2 applique un effort de serrage sur l'appendice de la matrice supérieure 40.2 de manière à s'opposer au retrait de celle-ci. Un levier de commande 51.3 actionnable manuellement permet d'amener l'élément d'appui 51.2 de la position dégagée à la position pivotée, puis de la position pivotée à la position serrée. La course du levier de commande 51.3 peut se décomposer en trois rotations successives réalisées dans un même sens : la première rotation permet de faire pivoter l'élément d'appui 51.2 de la position dégagée à la position pivotée ; la deuxième rotation permet d'amener l'élément d'appui 51.2 au contact de l'appendice de la matrice supérieure 40.2 ; la troisième rotation permet de faire appliquer à l'élément d'appui 51.2 un effort de serrage sur l'appendice de la matrice supérieure 40.2.

Le levier de commande 51.3 peut être remplacé par un écrou dont la rotation est automatisée par la descente d'une visseuse.

Il existe également des ensembles de bridage pivotants destinés à être reliés à un circuit hydraulique pour être pilotés hydrauliquement. Ils sont alors avantageusement couplés à un clapet anti-retour permettant de maintenir l'élément d'appui en position serrée sans nécessairement qu'il soit relié au circuit hydraulique.

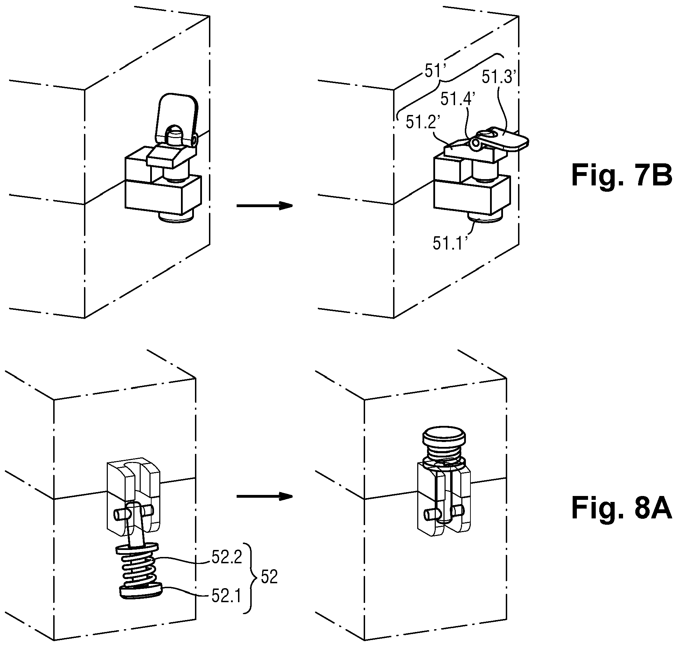

La figure 7B illustre une variante 51' de l'ensemble de bridage rapide pivotant 51 dans laquelle l'élément d'appui 51.2' est amené de la position pivotée à la position serrée via l'utilisation d'une came excentrique 51.4' reliée à un levier 51.3'.

La figure 8A illustre un deuxième type de dispositif de verrouillage 50 des matrices 40.1, 40.2 comprenant deux loquets 52.1 montés pivotant sur un appendice de la matrice inférieure 40.1 entre une position dégagée et une position serrée dans laquelle le loquet 52.1 est logé dans un appendice de la matrice supérieure 40.2 et exerce sur ce dernier un effort de serrage sous l'action d'un ressort 52.2.

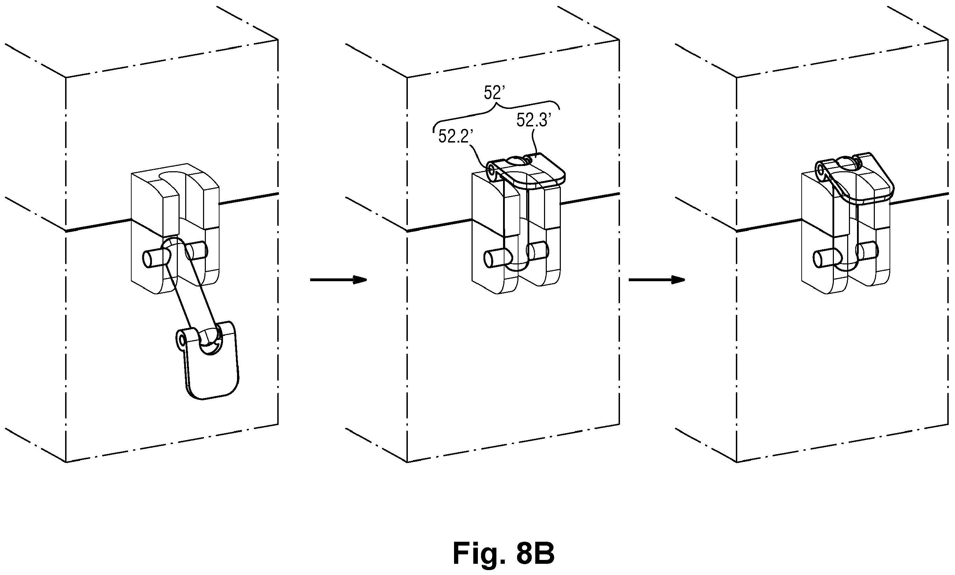

La figure 8B illustre une variante 52.1' du loquet 52.1 dans lequel l'effort de serrage est assuré par une came excentrique 52.2' reliée à un levier 52.3' et non par un ressort.

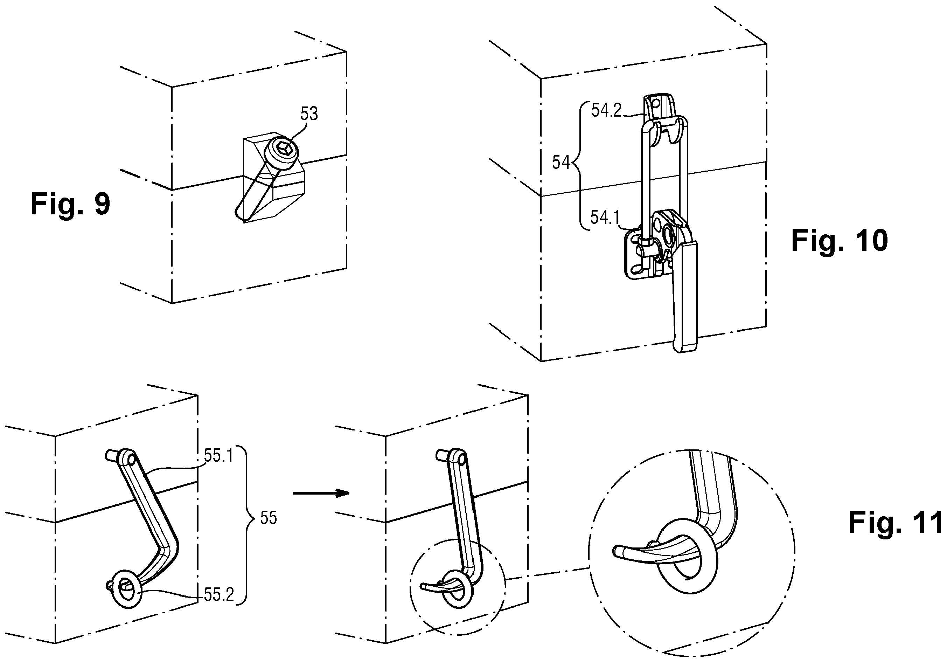

La figure 9 illustre un troisième type de dispositif de verrouillage 50 des matrices 40.1, 40.2 comprenant deux vis 53 destinées chacune à être vissée sur un côté de l'outil de matriçage 40 dans des pattes de fixation agencées pour solidariser les matrices 40.1, 40.2 entre elles. Les vis 53 sont ici avantageusement orientées selon une direction inclinée par rapport au plateau 41 de manière à faciliter l'accès aux têtes des vis 53 et d'en automatiser le vissage.

En variante, les vis 53 peuvent être remplacées par des goujons vissés sensiblement verticalement dans les pattes de fixation de la matrice inférieure 40.1 pour traverser la patte de fixation de la matrice supérieure 40.2 et pour coopérer avec des écrous de manière à solidariser la matrice supérieure 40.2 à la matrice inférieure 40.1.

La figure 10 illustre un quatrième type de dispositif de verrouillage 50 des matrices 40.1, 40.2 comprenant deux grenouillères 54.1 à crochet fixées sur la matrice inférieure 40.1 et destinées à coopérer avec des contre-crochets 54.2 fixés sur la matrice supérieure 40.2 pour assurer le maintien des matrices 40.1, 40.2 en position rapprochée.

La figure 11 illustre un cinquième type de dispositif de verrouillage 50 des matrices 40.1, 40.2 comprenant deux crochets 55.1 montés pivotant de part et d'autre de la matrice supérieure 40.2 entre une position dégagée et une position serrée dans laquelle chacun des crochets 55.1 coopère avec un anneau 55.2 fixé sur la matrice inférieure 40.1. L'effort de serrage est assuré par le profil excentrique du crochet 55.1 au fur et à mesure de son crochetage dans l'anneau 55.2.

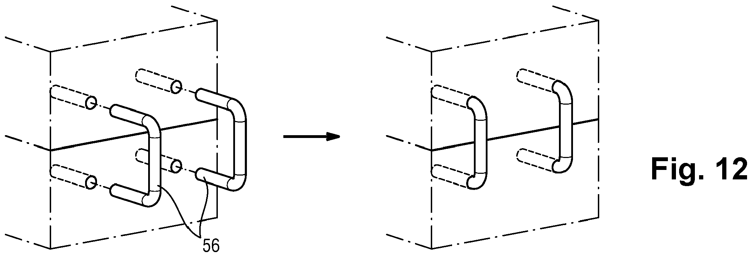

La figure 12 illustre un sixième type de dispositif de verrouillage 50 des matrices 40.1, 40.2 comprenant quatre agrafes 56 en forme de U disposées deux à deux de part et d'autre de l'outil de matriçage 40 dans un plan sensiblement vertical. Une extrémité libre des agrafes 56 est agencée pour être insérée dans un trou s'étendant sensiblement horizontalement dans la matrice inférieure 40.1 tandis que l'autre extrémité libre des agrafes 56 est agencée pour être insérée dans un trou s'étendant sensiblement horizontalement dans la matrice supérieure 40.2.

Lorsque les matrices 40.1, 40.2 sont solidarisées ensemble par le dispositif de verrouillage 50, l'effort de presse P est interrompu. Le caisson 42 contenant l'outil de matriçage 40 est alors transféré à un poste de maintien en température dans laquelle la pièce matricée est maintenue à une température prédéterminée pendant une durée prédéterminée de manière à ce que la résine thermoplastique imprègne correctement les fibres. La température et la durée sont notamment déterminées en fonction de la masse de la pièce et de la nature de la résine thermoplastique. Le maintien en température peut par exemple être réalisé via un four à résistance électrique, un four à infrarouge, un four fixe ou à passage continu...

L'outil de matriçage 40 est ensuite transféré à un poste de refroidissement dans lequel le caisson 42 est retiré pour laisser refroidir ledit outillage de matriçage 40 ainsi que la pièce qu'il contient avant de procéder à son démoulage. Le refroidissement est réalisé tout en maintenant les matrices solidarisées ensemble pendant toute la durée nécessaire à la solidification de la résine thermoplastique. Il peut être réalisé à l'air libre ou via un flux d'air diffusé sur des parois de l'outil de matriçage 40 ou sur des diffuseurs métalliques placés au contact de l'outil de matriçage 40 en fonction de la masse dudit outil de matriçage 40 et de la pièce, de la nature de la résine thermoplastique et du temps que l'on veut y consacrer.

Lorsque la résine thermoplastique est suffisamment solidifiée, l'outil de matriçage 40 est transféré à un poste d'extraction dans lequel le dispositif de verrouillage 50 est désactivé. La matrice supérieure 40.2 peut dès lors être désolidarisée de la matrice inférieure 40.1 et une double bielle 1 brute non déformée peut être extraite de l'outil de matriçage 40.

Conformément à l'invention, la fabrication d'une pièce ayant une géométrie différente la bielle double 1 est assurée avec des outillages analogues adaptés à cette autre géométrie.

Par ailleurs, il est possible de placer un insert dans la préforme 33 pour que celui-ci soit intégré à la pièce finie en étant rigidement solidarisé au corps de la pièce finie afin de faciliter par exemple les transferts d'efforts. Un tel insert est typiquement un élément d'une nature autre que le corps de la pièce, comme par exemple un insert de type métallique, un capteur, un palier, une partie de d'assemblage ou de fixation. Le procédé comprend alors l'étape de placer dans l'outillage de préformage au moins un insert pour que l'insert soit intégré dans le matériau de la préforme 33. A cette fin, le ou les inserts sont ici disposés dans l'outillage de préformage 20 avant placement des fibres et les fibres sont disposées pour entourer au moins en partie l'insert et participer à sa retenue dans la préforme 33.

Ainsi, ce procédé de fabrication permet de fabriquer en matériau composite des pièces initialement fabriquées en acier ou autre, lesdites pièces en matériau composite ayant un poids et/ou un volume plus faible et une tenue mécanique comparable selon un cas de charge donné.

Ce procédé de fabrication permet également de limiter l'utilisation de la presse à la mise en forme de la pièce. Une amélioration de la cadence de production de la pièce peut dès lors être envisagée.

On notera que l'outillage de mise en forme est de préférence agencé pour que la pièce obtenue présente des caractéristiques finales de la pièce à fabriquer. Ceci permet de limiter les reprises d'usinage à réaliser après la mise en forme.

Bien entendu, l'invention n'est pas limitée aux modes de réalisation décrits mais englobe toute variante entrant dans le champ de l'invention telle que définie par les revendications.

Le procédé selon l'invention permet de fabriquer des pièces ayant des formes complexes, s'étendant selon les trois dimensions, et pouvant également être massives soit dans des régions localisées, soit sur l'ensemble de la pièce.

La bielle double 1 est obtenue en bobinant un seul toron de fibres. Mais dans le cas d'une pièce de forme plus complexe, il est tout à fait possible de bobiner plusieurs torons correspondant par exemple à plusieurs parties de la pièce à fabriquer.

Bien que les fibres de renfort soient ici pré-imprégnées de résine thermoplastique, on pourrait aussi utiliser des fibres sèches mises en place dans un outillage formant moule dans lequel la résine thermoplastique serait introduite ultérieurement, avant l'application de l'effort de presse.

Les fibres peuvent être en tout matériau susceptible de renforcer mécaniquement le matériau thermoplastique compte tenu des performances recherchées et notamment en aramide, polyaramide, verre, carbone... La préforme peut comprendre des fibres de matériaux différents.

Les fibres sont ici longues, c'est-à-dire qu'elles ont une longueur minimale sensiblement de l'ordre de la longueur de la pièce. Les fibres ont de préférence une longueur au moins sensiblement égale à un multiple entier -par exemple deux, trois, quatre ou plus- de la longueur de la pièce. Néanmoins, certaines des fibres peuvent être courtes, c'est-à-dire avoir une longueur inférieure à une longueur de la pièce brute. Des fibres courtes peuvent être rajoutées en complément dans certaines zones.

Des fibres ayant une fonction autre que le renfort peuvent également être rajoutées dans la résine ou combinées aux fibres de renfort, et par exemple des fibres optiques ou toutes autres fibres susceptibles de transmettre un signal. Ces fibres conductrices de signal peuvent par exemple avoir une extrémité reliée à un capteur noyé dans la pièce et une extrémité opposée débouchant à l'extérieur de la pièce pour être raccordée à une unité de traitement du signal.

Bien que la préforme de la pièce 1 soit ici réalisée en bobinant à chaud un toron de fibres imprégné de résine, d'autres procédés peuvent être utilisés pour réaliser la préforme.

Le procédé peut comprendre l'étape de compresser la préforme avant durcissement de la résine afin d'obtenir un taux volumique de fibres prédéterminé

La résine peut être en différents matériaux thermoplastiques et par exemple en : polypropylène, polyamide, acrylique, polyéthylène sulfone (PES), polyétheréthercétone (PEEK), polyéthercétonecétone (PEKK), polyétherimide (PEI)...

Bien que l'outil de matriçage 40 soit ici enfermé dans le caisson 42 après avoir été rechauffé dans le dispositif de chauffage, il peut aussi être enfermé dans ledit caisson 42 juste avant son transfert dans ledit dispositif de chauffage.

Lorsque la résine thermoplastique a une plage de température de mise en forme étendue et que l'outil de matriçage 40 présente un volume important, autrement dit une inertie thermique importante, il n'est pas forcément nécessaire d'enfermer l'outil de matriçage 40 dans le caisson 42 isolant.

Le refroidissement et/ou le maintien en température peuvent être obtenus par la mise en œuvre d'un cycle thermique piloté.

Les moyens de verrouillage des matrices entre elles peuvent avoir toute structure permettant de figer temporairement la position relative des matrices.

## Revendications

1. Procédé pour fabriquer une pièce (1) en matériau composite, comprenant les étapes de :
- réaliser une préforme de la pièce ;
- installer la préforme dans un outillage de mise en forme (40) comprenant une matrice inférieure (40.1) et une matrice supérieure (40.2) qui comportent en creux une empreinte reproduisant une forme externe de la pièce à fabriquer ;
- appliquer à chaud, à l'aide d'une presse, un effort de presse (P) sur les matrices pour amener les matrices dans une position rapprochée dans laquelle la préforme est pressée entre les deux matrices ;
- solidariser ensemble les matrices de manière à les maintenir en position rapprochée puis interrompre l'effort de presse ;
- retirer de la presse les matrices ainsi solidarisées et les refroidir ;
- désolidariser la matrice inférieure (40.1) et la matrice supérieure (40.2) pour en extraire la pièce ainsi formée.

2. Procédé selon la revendication 1, dans lequel la réalisation de la préforme comporte l'étape de disposer des fibres longues de renfort et de la résine dans un outillage de préformage (20).

3. Procédé selon la revendication 2, dans lequel au moins un insert est placé dans l'outillage de préformage (20) pour que celui-ci soit intégré dans le matériau de la préforme.

4. Procédé selon l'une quelconque des revendications précédentes, comprenant l'étape de chauffer l'outillage de mise en forme (40) pour réchauffer la préforme avant d'être transféré sous la presse.

5. Procédé selon la revendication 4, comprenant l'étape de sensiblement maintenir en température l'outillage de mise en forme (40) au moins jusqu'à son retrait de la presse.

6. Procédé selon l'une quelconque des revendications précédentes, dans lequel le refroidissement de l'outillage de mise en forme (40) est réalisé par un flux d'air diffusé sur des parois de l'outil de mise en forme ou sur des diffuseurs placés au contact dudit outil de mise en forme.

7. Procédé selon l'une quelconque des revendications précédentes, dans lequel la solidarisation des matrices (40.1, 40.2) est réalisée par un dispositif de serrage mécanique (50).

8. Outil de matriçage (40) pour la mise en œuvre du procédé selon l'une quelconque des revendications précédentes, comprenant :
- une matrice inférieure (40.1) et une matrice supérieure (40.2) montée mobile par rapport à la matrice inférieure entre une position éloignée et une position rapprochée, les matrices comportant en creux une empreinte reproduisant une forme externe d'une pièce (1) à fabriquer ; et
- un dispositif de verrouillage (50) pouvant être commuté entre un état verrouillé dans lequel il empêche tout éloignement de la matrice supérieure par rapport à la matrice inférieure et un état déverrouillé dans lequel la matrice supérieure est libre de s'éloigner de la matrice inférieure.

9. Outil de matriçage selon la revendication 8, dans lequel le dispositif de verrouillage est un dispositif de serrage mécanique (51, 51', 52, 52', 53, 54, 55, 56).
